# EUROPEAN PATENT APPLICATION

(11) **EP 1 394 875 A1**
(43) Date of publication of application: **03.03.2004**
(21) Application number: 03017933.7
(22) Date of filing: 06.08.2003
(51) Int. Cl.: H01M 2/02, H01M 2/10

(54) **Container for electrical accumulators**

(30) Priority: 14.08.2002 IT VI20020185
(71) Applicant: Stocchiero, Franco, 36050 Montorso Vicentino (VI) (IT)
(72) Inventor: Stocchiero, Franco, 36050 Montorso Vicentino (VI) (IT)
(74) Representative: Terreran, Gabrio

(57) **Abstract**

The invention realises an improved container (1, 100) for accumulators equipped with one or more cells (3), suitable for housing one or more elements (E) of the accumulator and defined by walls (2, 20) of which one is equipped with one flexible support tab (4,40), for one or more elements (E), which substantially extends on a vertical plane (5). A portion (7, 70) of the longitudinal profile of the support tab (4, 40) has a twist with respect to the vertical plane (5) suitable for giving the desired flexibility to the support tab (4,40).

## Description

The invention concerns an improved container for electrical accumulators equipped with a plurality of support tabs which constitute the accumulator itself.

As is known, electrical accumulators are substantially made up of a container normally made from polypropylene and also called a monobloc, equipped inside with a plurality divider walls.

The walls define cells inside of which are arranged the electrolyte and the elements of the electrical accumulator, supported by suitable support means.

The support means ensure correct positioning of the elements, avoiding undesired displacement thereof, and they consist of many vertical tabs, projecting obliquely from the side walls of each cell.

In particular, such tabs extend vertically from the top of the container up to near to the bottom and they are arranged in pairs on the side walls.

Each pair generally faces a corresponding pair of tabs present in the opposite side wall with which it cooperates to support the elements of the accumulator.

As far as the elements are concerned, they each consist of a plurality of plates arranged facing each other and electrically and mechanically connected together.

As is known, the thickness of each element, with the number of plates being equal, is determined by the accuracy with which they have been assembled.

This makes it necessary that the support tabs adapt to such different thicknesses in any case falling within the foreseen dimensional tolerances.

Such adaptability is ensured by the characteristics of flexibility and/or elastic yield of each tab.

To obtain such elastic yield the prior art foresees that each tab has both the lower and upper ends free.

In particular, it is necessary that the lower end be detached from the bottom of the container.

Only thanks to this provision is each tab able to flex thus allowing elements of different sizes to be received resting upon it.

The assembly of the accumulator foresees that the elements be arranged inside the cells so that the most outer plates be placed in contact with the tabs. These tabs, elastically yielding, adapt to the thickness of the element supporting it and preventing any lateral movement thereof.

A first drawback of known support means consists of the fact that the flexibility of each tab is determined exclusively by the thickness of the tab itself and by the material from which it is made.

Another drawback consists of the fact that it is not possible to obtain different and predetermined longitudinal flexibilities at the design stage and used to finely control the positioning of each element.

A further drawback consists of the fact that to realise the separation between the lower end of the tab and the bottom of the container it is necessary to use a particularly expensive mould.

Indeed, as is known, to realise such tabs it is necessary to adopt a mould equipped with mobile trolleys which, suitably actuated in the moulding step of the container, separate the tab from the bottom of the container.

Another limit to known support means consists of the fact that each element is not supported at the bottom of the container.

A further drawback linked to the previous one consists of the fact that such mould must be subjected to frequent revisions and maintenance, necessary to ensure the correct operation of the aforementioned mobile trolleys.

Another drawback linked to the previous one consists of the long idle time and the consequent lost production.

A further drawback consists of the fact that the time for moulding the container is substantially increased by the need to actuate the aforementioned trolleys with the clear repercussions on the production cost.

The purpose of the present invention is to overcome said drawbacks.

In particular, a first purpose of the invention is to realise a container for accumulators equipped with support means which have a flexibility which can be determined at the design stage and which does not depend exclusively upon the material used.

Another purpose is to realise a container for accumulators which has support tabs having longitudinal flexibility which can also be different.

A further purpose is to realise a container equipped with support means which support each element for the whole of its length.

Another purpose is to realise a container which has flexible support tabs which can be obtained with a mould without mobile trolleys.

A further purpose is to realise a container equipped with support tabs having greater adaptability with respect to known members.

Another purpose is to realise a container for accumulators equipped with support means which, whilst adapting to the size of the elements of the accumulator, ensure optimal support thereof.

The last but not least purpose it to have a cost-effective container which can be realised in a shorter time with respect to analogous containers obtained with conventional methods.

Said purposes are accomplished by an improved container for accumulators which, in accordance with the main claim, is equipped with one or more cells suitable for housing one or more elements of said accumulator and defined by walls of which at least one is equipped with at least one flexible side support tab, for said one or more elements, which substantially extends on a vertical plane characterised in that at least a portion of the longitudinal profile of said at least one support tab has a twist with respect to said vertical plane suitable for giving said desired flexibility to said at least one support tab.

According to a preferred embodiment such a twist is realised near to the lower end of the support tab, at the connection zone of the tab with the bottom of the container.

Again advantageously, the proposed container can be realised with a conventional mould, without mobile trolleys and therefore with lower moulding and production times and maintenance costs with respect to known systems.

Again advantageously, the type of support means proposed allows the flexibility of the support itself to be controlled with greater accuracy.

In particular, the twist given to each tab in the moulding step determines the position of maximum flexing of the support.

Said purposes and advantages shall become clearer during the description of a preferred embodiment given for indicating and not limiting purposes with reference to the attached tables of drawings, where:
- figure 1 represents a top view of a section of an accumulator realised with the container object of the invention;
- figure 2 represents a top view of a section of the container of figure 1 with the support tabs in a work position;
- figure 3 represents a front view of the support tabs of the container of figure 1;
- figure 4 represents a top view of a section of the container of figure 1 with the support tabs in the position of maximum flexing;
- figure 5 represents a top view of a section of a variant embodiment of the container of figure 1 with the support tabs in a work position;
- figure 6 represents a front view of the support tabs of the container of figure 5;
- figure 7 represents a top view of a section of the container of figure 5 with the support tabs in the maximum flexing position.

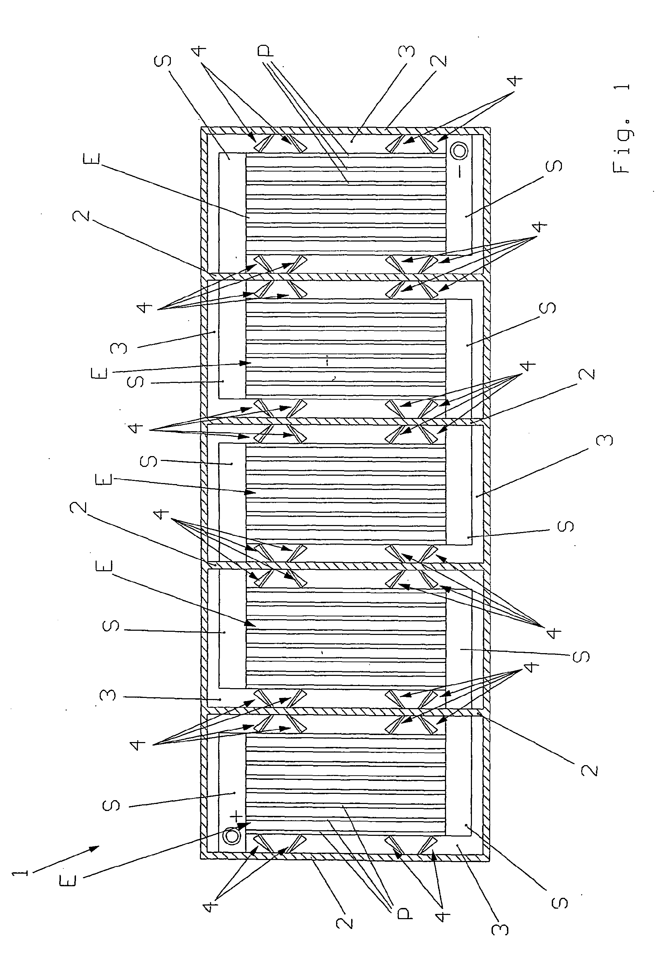

The improved container for electrical accumulators is represented in figure 1 where it is wholly indicated with reference numeral 1.

The accumulator substantially consists of a container 1 made from polypropylene equipped on the inside with a plurality of vertical divider walls 2 which define the cells 3 inside of which the elements E of the accumulator and the electrolyte are arranged.

The elements E, as stated previously, consist of a plurality of plates P arranged facing each other and electrically and mechanically connected through connection rods S made from lead.

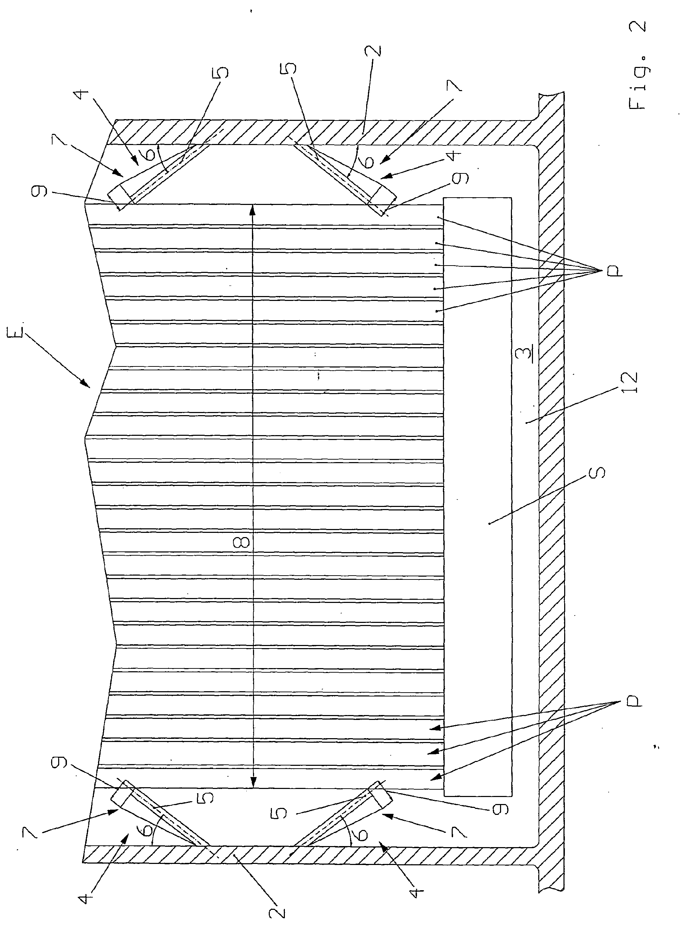

Each element E is supported, inside the cell 3, by flexible side support tabs 4 that can be seen more clearly in figure 2 arranged in pairs on the walls 2.

Each pair faces a corresponding pair of tabs 4 present in the opposite wall 2 with which it cooperates to support the elements E of the accumulator.

In particular, such tabs 4 projecting from the walls 2, extend substantially on a vertical plane, indicated with 5, which extends obliquely with respect to the wall 2 forming an acute angle 6 with it.

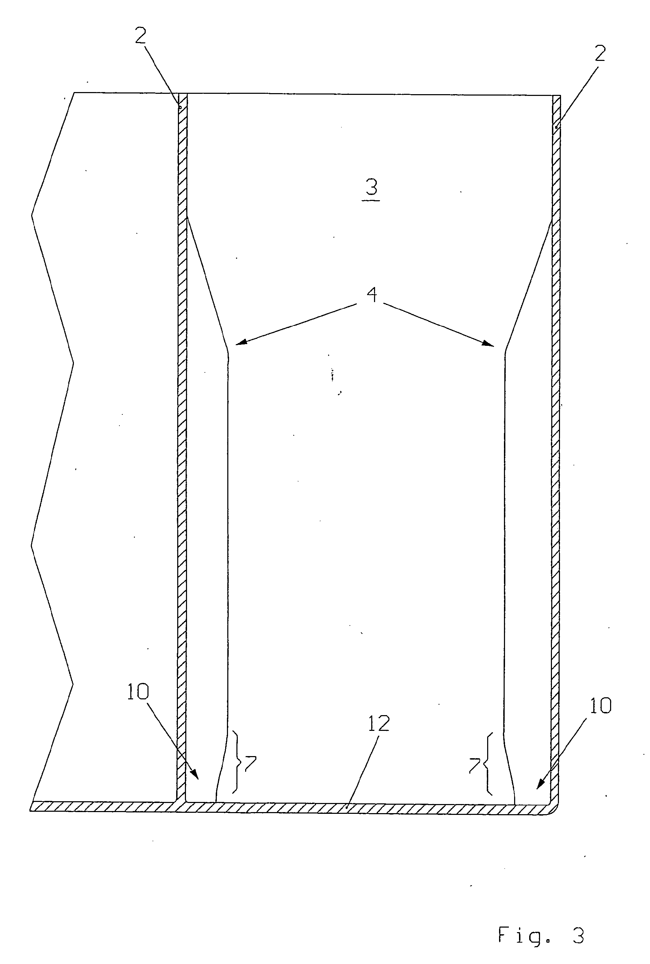

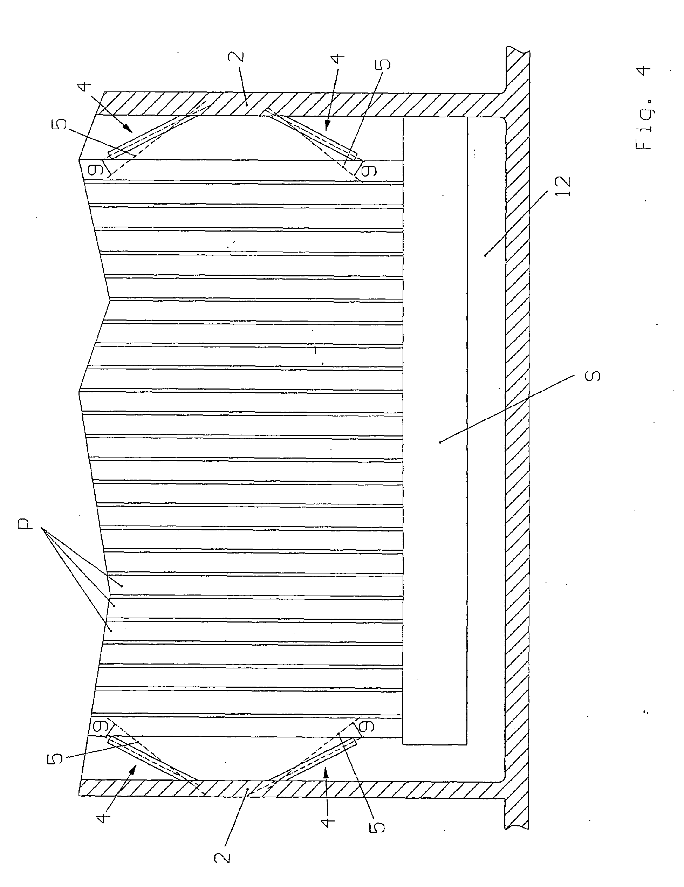

The invention foresees that a portion of the longitudinal profile of each support tab 4, indicated with reference numeral 7 in figure 3, has a twist with respect to the vertical plane 5 suitable for giving the desired flexibility to the tab 4 itself, necessary, as stated previously, for housing elements E having different widths 8. The maximum twist of the cross-section of the support tab 4 with respect to the vertical plane 5, indicated with 9 in figure 2, is equal to the maximum transversal flexing of the tab 4 along the whole vertical extension which can be seen in figure 4.

The twist is given to the twisted portion 7 with a longitudinal profile of the tab 4 in the moulding step and can therefore be varied as desired according to the adaptability characteristics intended to be given to the tab 4 itself.

The twist substantially consists a helical surface generated by moving the cross-section of the support tab with uniform helical motion in the aforementioned portion, rotating said cross-section by an angle 9 from the position of maximum twist, which can be seen in figure 4, to the position coinciding with the vertical plane 5.

This allows a curved surface to be obtained in such a portion 7 that joins the two extreme positions which can be taken up by the tab 4, respectively rest position substantially coinciding with the plane 5 and the position of maximum flexing, substantially defined by the vertical plane of maximum twist which forms an angle 9 with the plane 5.

In the represented embodiment the cross section of the tab 4, as can again be seen in figure 4, is rectangular.

It should also be observed that the lower end 10 of the support tab 4 is integral with the bottom 12 of the container 1 near to which the portion with a twisted longitudinal profile 7 is arranged.

More precisely, the support tabs 4, the bottom 12 of the container 1 and the walls 2 form a single body and are realised in a monobloc by moulding.

The fact that flexibility of the tab 4 has been obtained by realising at least one twisted portion 7 allows the container to be realised using a mould without mobile trolleys. Indeed, such a provision eliminates the undercut present in all of the known realisations whilst still ensuring the necessary elasticity thanks to the twisted portion 7.

The elasticity of the tab 4 itself, indeed, in the step of ejecting the container 1 from the mould, allows the twist realised in the mould body to be followed, thus allowing the extraction of the container 1 from the mould.

It is important to observe that the tabs 4 extending up to the bottom 12 of the container 1 define a precise seat for each element E, thus increasing both the precision in positioning of each element E during the assembly of the accumulator and the supporting action.

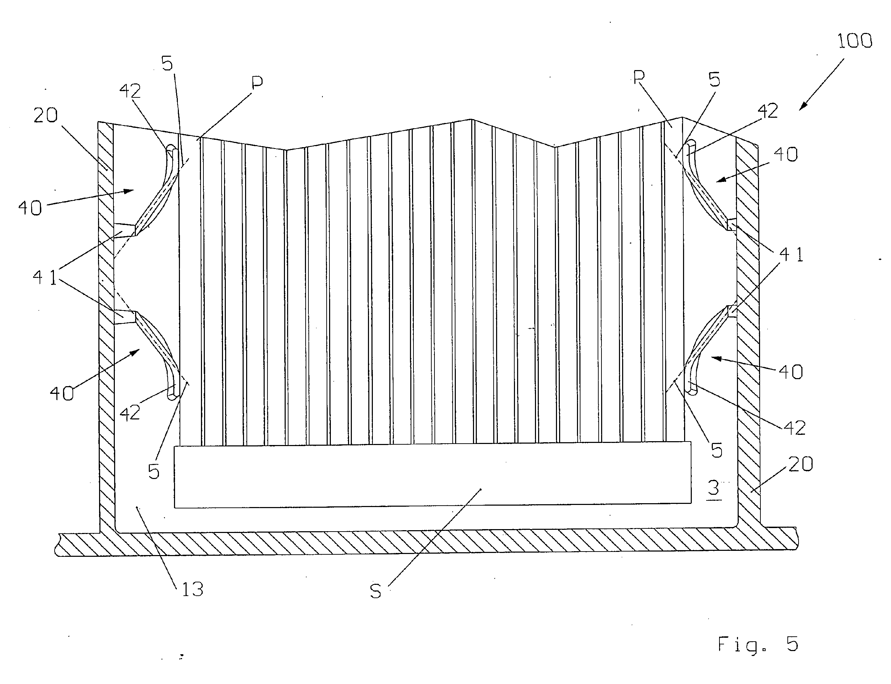

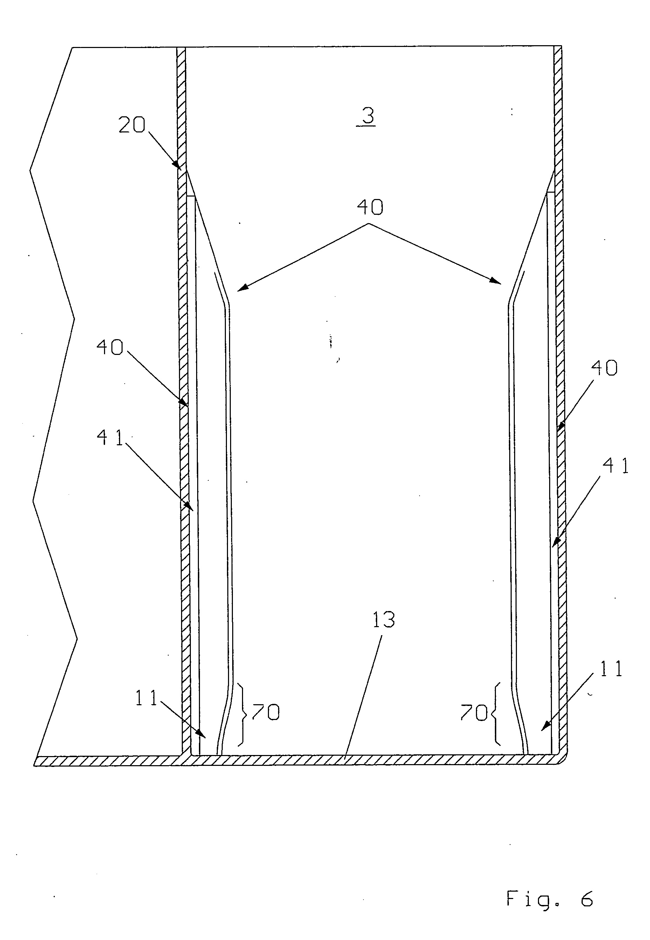

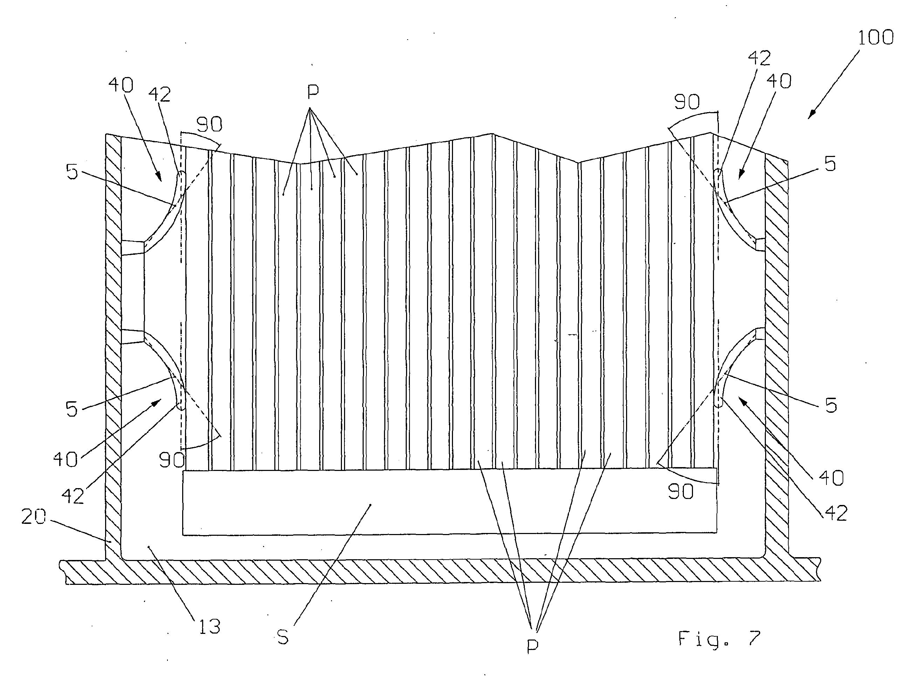

A variant embodiment of the container wholly indicated with reference numeral 100 in figures 5 to 7 differs from the previous one in that the cross-section of the tab 40 is shaped and more precisely polygonal.

It should be observed that in such an embodiment the first portion 41 of the cross-section is perpendicular to the wall 20. This ensures that the tab 40 does not flex longitudinally in such a portion 41, thus advantageously also allowing the longitudinal flexibility of the tab 40 itself to be modulated.

It should also be observed that the end part 42 of the tab 40 is shaped so as to have a support surface for the substantially flat element E. More precisely, the tab 4, 40 is placed in contact with a separator element, not represented, placed between the most outer plate and the tab 4, 40.

Such a provision advantageously also avoids possible damage during the assembly of the accumulator and more precisely in the step of inserting the element E in the cell 3.

In other embodiments the cross-section can, however, be different, like for example have a mixtilinear or curved profile.

The assembly of the accumulator foresees that the elements E be arranged inside the cells 3 so that the most outer plates P are placed in contact with the tabs 4. These tabs, elastically yielding, adapt to the thickness 8 of the element E supporting it and preventing any lateral movement thereof.

The maximum elastic excursion 9, 90 of each tab 4, 40 is determined, as stated previously, by the maximum degree of twist of the aforementioned twisted portion 7, 70.

Finally, it should be observed that the twisted portion 7, 70 can be realised in any position along the vertical extension of the tabs 4, 40 and not necessarily near to the bottom 12, 13 respectively of the container 1, 100, in any case ensuring the same effect.

Although the invention has been described referring to the attached tables of drawings, it can undergo modifications in embodiment, all of which are covered by the same inventive concept expressed by the claims listed hereafter and therefore protected by the present patent.

## Claims

1. Improved container (1, 100) for accumulators equipped with one or more cells (3), suitable for housing one or more elements (E) of said accumulator and defined by walls (2, 20) of which at least one is equipped with at least one flexible support tab (4,40), for said one or more elements (E), which substantially extends on a vertical plane (5) **characterised in that** at least a portion (7, 70) of the longitudinal profile of said at least one support tab (4, 40) has a twist with respect to said vertical plane (5) suitable for giving said desired flexibility to said at least one support tab (4,40).

2. Container (1, 100) according to claim 1) **characterised in that** the lower end (10) of said at least one support tab (4, 40) is integral with the bottom (12, 13) of said container (1, 100).

3. Container (1, 100) according to claim 1) or 2) **characterised in that** at least one of said at least a portion of twisted longitudinal profile (7, 70) is arranged near to the bottom (12, 13) of said container (1, 100).

4. Container (1, 100) according to claim 1) or 2) or 3) **characterised in that** said twisted portion (7, 70) substantially consists of a helical surface.

5. Container (1, 100) according to claim 4) **characterised in that** said helical surface is generated by moving at least a part of the cross-section of said at least one support tab (4, 40) with substantially uniform helical motion in said at least one portion (7, 70), from the position of maximum twist to the position coinciding with said vertical plane (5).

6. Container (1, 100) according to any one of the previous claims **characterised in that** said at least one support tab (4, 40) has a shaped cross-section.

7. Container (1) according to claim 6) **characterised in that** said shaped cross-section is polygonal.

8. Container (100) according to claim 6) **characterised in that** said shaped cross-section is mixtilinear.

9. Container (100) according to claim 6) **characterised in that** said shaped cross-section is curved.

10. Container (100) according to any one of the previous claims **characterised in that** at least a portion (42) of the end part of said at least one support tab (4, 40) is shaped so as to have a substantially flat surface for said one or more elements (E).

11. Container (1, 100) according to any one of the previous claims **characterised in that** the maximum twist (9, 90) of the cross-section of said at least one support tab (4, 40), with respect to said substantially vertical plane (5), is substantially equal to the maximum flexing of said at least one support tab (4, 40).

12. Container (1, 100) according to any one of the previous claims **characterised in that** said at least one support tab (4, 40), said bottom (12, 13) and said wall (2, 20) are realised in a monobloc by moulding.

13. Container (1, 100) according to any one of the previous claims **characterised in that** said twist is given to said portion of longitudinal profile (7, 70) of said at least one support tab (4, 40) in the moulding step.

14. Container (1, 100) according to claim 13) **characterised in that** the mould used to obtain said at least one tab (4, 40) has no moving parts.

15. Container (1, 100) according to any one of the previous claims **characterised in that** said substantially vertical plane (5) is oblique with respect to said wall (2, 20).

16. Improved container (1, 100) substantially as described with reference to the attached drawings.
